# EUROPÄISCHE PATENTSCHRIFT

(11) **EP 4 018 058 B1**
(45) Veröffentlichungstag und Bekanntmachung des Hinweises auf die Patenterteilung: **04.10.2023**
(21) Anmeldenummer: 20761180.7
(22) Anmeldetag: 20.08.2020
(51) Int. Cl.: E04G 21/04, F16L 27/00

(54) **VORRICHTUNG FÜR EINEN VERTEILERMAST, VERTEILERMAST AUFWEISEND EINE VORRICHTUNG UND SYSTEM AUFWEISEND EINEN VERTEILERMAST**
DEVICE FOR A DISTRIBUTOR BOOM, DISTRIBUTOR BOOM COMPRISING A DEVICE AND SYSTEM COMPRISING A DISTRIBUTOR BOOM
DISPOSITIF POUR MÂT DE DISTRIBUTION, MÂT DE DISTRIBUTION COMPRENANT UN DISPOSITIF ET SYSTÈME COMPRENANT UN MÂT DE DISTRIBUTION

(30) Priorität: 22.08.2019 DE 102019212616
(43) Veröffentlichungstag der Anmeldung: 29.06.2022
(73) Patentinhaber: Putzmeister Engineering GmbH, 72631 Aichtal (DE)
(72) Erfinder: FÜGEL, Dietmar, 72649 Wolfschlugen (DE); RAU, Benjamin, 72141 Walddorfhäslach (DE); PAWISA, Benedikt, 73249 Wernau (DE)
(74) Vertreter: Patentanwälte Ruff, Wilhelm, Beier, Dauster & Partner mbB
(86) Internationale Anmeldenummer: PCT/EP2020/073305
(87) Internationale Veröffentlichungsnummer: WO 2021/032825

(56) Entgegenhaltungen:
- DE-A1- 3 909 212
- DE-A1-102010 061 021
- DE-A1-102014 005 100

## Beschreibung

### ANWENDUNGSGEBIET UND STAND DER TECHNIK

Die Erfindung bezieht sich auf eine Vorrichtung für einen Verteilermast, einen Verteilermast aufweisend eine solche Vorrichtung und ein System aufweisend einen solchen Verteilermast.

DE 10 2014 005100 A1 offenbart eine Vorrichtung für einen Verteilermast.

### AUFGABE UND LÖSUNG

Der Erfindung liegt als Aufgabe die Bereitstellung einer Vorrichtung für einen Verteilermast, wobei die Vorrichtung verbesserte Eigenschaften aufweist, eines Verteilermast aufweisend eine solche Vorrichtung und eines Systems aufweisend einen solchen Verteilermast zugrunde.

Die Erfindung löst diese Aufgabe durch die Bereitstellung einer Vorrichtung mit den Merkmalen des Anspruchs 1, eines Verteilermasts mit den Merkmalen des Anspruchs 13 und/oder eines Systems mit den Merkmalen des Anspruchs 14. Vorteilhafte Weiterbildungen und/oder Ausgestaltungen der Erfindung sind in den abhängigen Ansprüchen beschrieben.

Die erfindungsgemäße Vorrichtung ist für einen Verteilermast, insbesondere einen Faltmast, geeignet. Die Vorrichtung weist eine Leitung und eine Leitungsabschnitt-Halterung bzw. Leitungsabschnitt-Stützung auf. Die Leitung weist einen Mast-Leitungsabschnitt und einen losen bzw. freies Dreh-Leitungsabschnitt auf. Der Dreh-Leitungsabschnitt ist mit dem Mast-Leitungsabschnitt drehbar verbunden. Die Leitungsabschnitt-Halterung weist ein loses bzw. freies Dreh-Halteelement bzw. Dreh-Stützelement und ein Drehlager auf. Das Dreh-Halteelement hält bzw. stützt, insbesondere drehfest, den Dreh-Leitungsabschnitt entfernt bzw. beabstandet von dem Mast-Leitungsabschnitt. Das Drehlager ist zur, insbesondere drehfesten, Halterung bzw. Stützung durch ein, insbesondere letztes, Mastsegment, insbesondere eine Mastspitze, bzw. einen Auslegerarm für den Verteilermast ausgebildet bzw. konfiguriert. Des Weiteren ist das Drehlager zur drehbaren Verbindung des Dreh-Halteelements mit dem Mastsegment ausgebildet bzw. konfiguriert. Außerdem definiert bzw. begrenzt das Drehlager einen Kreis. Die Leitung führt bzw. verläuft, insbesondere vollständig, durch den Kreis hindurch.

Die Leitungsabschnitt-Halterung ermöglicht bei Halterung des Drehlagers durch das Mastsegment, dass der Dreh-Leitungsabschnitt nicht, insbesondere alleine, mittels des Mast-Leitungsabschnitts gehalten sein braucht oder kann. Somit ermöglicht dies, dass der Dreh-Leitungsabschnitt eine relativ große Masse, insbesondere von minimal 50 Kilogramm (kg), insbesondere minimal 100 kg, insbesondere minimal 200 kg, und/oder maximal 2000 kg, insbesondere maximal 1000 kg, insbesondere 500 kg, aufweisen kann, insbesondere im Unterschied zu einer nicht-erfindungsgemäßen Vorrichtung ohne Leitungsabschnitt-Halterung. Zusätzlich oder alternativ braucht oder kann der Mast-Leitungsabschnitt das Drehlager nicht halten, insbesondere bei Halterung des Drehlagers durch das Mastsegment.

Die drehbare Verbindung des Dreh-Leitungsabschnitts mit dem Mast-Leitungsabschnitt und die drehbare Verbindung des Dreh-Halteelements mit dem Mastsegment mittels des Drehlagers ermöglichen, dass das Dreh-Halteelement mit dem Dreh-Leitungsabschnitt sich in eine Richtung vertikal nach unten drehen kann, insbesondere aufgrund von Gravitation.

Die Führung der Leitung durch den Kreis ermöglicht, dass eine Drehung des Dreh-Halteelements mit dem Dreh-Leitungsabschnitt relativ uneingeschränkt sein kann, insbesondere im Unterschied zu einer nicht-erfindungsgemäßen Führung der Leitung nicht durch den Kreis. Somit ermöglicht dies eine relativ große Flexibilität bzw. relativ freie Bewegungsabläufe und/oder relativ effektive Einsatzbereiche, wie z. B. als Tremie für einen Mastfaltungstyp 5RZ (R: Roll) und/oder für Faltmasten, bei deren Faltungsart relativ große Winkelbereiche durchfahren werden müssen.

Somit weist die Vorrichtung verbesserte Eigenschaften auf.

Insbesondere können die Leitung und die Leitungsabschnitt-Halterung verschieden sein.

Die Leitung kann kontinuierlich bzw. ununterbrochen sein, insbesondere für einen Fluss, insbesondere von Baustoff, insbesondere Dickstoff. Zusätzlich oder alternativ können der Mast-Leitungsabschnitt und der Dreh-Leitungsabschnitt für einen Fluss, insbesondere von Baustoff, insbesondere von Dickstoff, miteinander verbunden sein. Weiter zusätzlich oder alternativ können der Mast-Leitungsabschnitt und der Dreh-Leitungsabschnitt verschieden sein. Weiter zusätzlich oder alternativ kann der Mast-Leitungsabschnitt zur, insbesondere drehfesten, Halterung durch das Mastsegment ausgebildet sein und/oder die Leitungsabschnitt-Halterung kann den Mast-Leitungsabschnitt, insbesondere drehfest, halten. Weiter zusätzlich oder alternativ kann der Mast-Leitungsabschnitt den Dreh-Leitungsabschnitt halten. Weiter zusätzlich oder alternativ kann der Dreh-Leitungsabschnitt mittels des Mast-Leitungsabschnitts bei Halterung durch das Mastsegment an dem Mastsegment gehalten sein, insbesondere aber nicht unmittelbar.

Das Dreh-Halteelement und das Drehlager können verschieden sein. Zusätzlich oder alternativ kann das Drehlager das Dreh-Halteelement halten. Weiter zusätzlich oder alternativ kann das Dreh-Halteelement mittels des Drehlagers bei Halterung durch das Mastsegment an dem Mastsegment gehalten sein, insbesondere aber nicht unmittelbar. Weiter zusätzlich oder alternativ kann der Dreh-Leitungsabschnitt mittels des Dreh-Halteelements und des Drehlagers bei Halterung durch das Mastsegment an dem Mastsegment gehalten sein, insbesondere aber nicht unmittelbar. Weiter zusätzlich oder alternativ kann das Dreh-Halteelement von dem Drehlager bis zu dem Dreh-Leitungsabschnitt führen.

Hält entfernt kann bedeuten, dass das Dreh-Halteelement den Dreh-Leitungsabschnitt entfernt von der drehbaren Verbindung des Dreh-Leitungsabschnitts mit dem Mast-Leitungsabschnitt halten kann. Zusätzlich oder alternativ kann die drehbare Verbindung des Dreh-Leitungsabschnitts mit dem Mast-Leitungsabschnitt zur Halterung durch das Mastsegment ausgebildet sein und/oder die Leitungsabschnitt-Halterung kann die drehbare Verbindung halten.

Lose kann bedeuten, dass das Dreh-Halteelement mit dem Dreh-Leitungsabschnitt sich selbst ausrichten kann, insbesondere aufgrund von Gravitation. Zusätzlich oder alternativ brauchen/braucht oder können/kann der Dreh-Leitungsabschnitt und/oder das Dreh-Halteelement nicht drehbar angetrieben sein.

Die Vorrichtung kann zur Anordnung der drehbaren Verbindung des Dreh-Leitungsabschnitts mit dem Mast-Leitungsabschnitt und/oder der drehbaren Verbindung der Leitungsabschnitt-Halterung an einem, insbesondere losen bzw. freien, Ende des Mastsegments ausgebildet sein.

Das Drehlager oder mindestens ein Lager-Element des Drehlagers oder eine Bewegungsbahn, insbesondere Drehbahn, des Drehlagers oder des Lager-Elements kann die Form mindestens eines, insbesondere offenen, Kreisbogens, insbesondere kleiner 360 Grad, wobei der Kreisbogen den Kreis definieren kann, oder sogar des, insbesondere geschlossenen, Kreises, insbesondere gleich 360 Grad, insbesondere Vollkreises, aufweisen. Zusätzlich oder alternativ kann die Leitung durch das Drehlager hindurch führen. In anderen Worten: das Drehlager kann die Leitung umfassen, insbesondere umschließen. Weiter zusätzlich oder alternativ kann das Drehlager ein Radiallager, insbesondere ein Radiaxlager, aufweisen, insbesondere sein.

Die Vorrichtung weist eine von dem Dreh-Halteelement und dem Drehlager verschiedene Drehkupplung auf. Die Drehkupplung verbindet drehbar den Dreh-Leitungsabschnitt mit dem Mast-Leitungsabschnitt. Insbesondere kann die Drehkupplung eine Rohrkupplung aufweisen, insbesondere sein. Zusätzlich oder alternativ kann hält entfernt bedeuten, dass das Dreh-Halteelement den Dreh-Leitungsabschnitt entfernt von der Drehkupplung halten kann. Weiter zusätzlich oder alternativ kann das Dreh-Halteelement den Dreh-Leitungsabschnitt an der Drehkupplung halten.

In einer Weiterbildung der Erfindung ist der Dreh-Leitungsabschnitt mit dem Mast-Leitungsabschnitt endlos drehbar verbunden. Das Drehlager ist zur endlos drehbaren Verbindung des Dreh-Halteelements mit dem Mastsegment ausgebildet bzw. konfiguriert. Die Vorrichtung ist derart ausgebildet bzw. konfiguriert, dass bei Halterung des Drehlagers, insbesondere und des Mast-Leitungsabschnitts, durch das Mastsegment eine Endlos-Drehung des Dreh-Halteelements mit dem Dreh-Leitungsabschnitt durch das Mastsegment und den Mast-Leitungsabschnitt, insbesondere und die übrige bzw. restliche Leitungsabschnitt-Halterung, uneingeschränkt ist. Dies ermöglicht eine relativ große Flexibilität bzw. relativ freie Bewegungsabläufe und/oder relativ effektive Einsatzbereiche. Insbesondere kann endlos drehbar 360 Grad und weiter drehbar bedeuten. Zusätzlich oder alternativ kann die übrige Leitungsabschnitt-Halterung das Drehlager aufweisen, insbesondere sein. Weiter zusätzlich oder alternativ kann die Leitungsabschnitt-Halterung ein Mast-Halteelement aufweisen, wobei das Mast-Halteelement zur, insbesondere drehfesten, Halterung durch das Mastsegment ausgebildet sein kann und das Drehlager, insbesondere und den Mast-Leitungsabschnitt, halten kann. Die übrige Leitungsabschnitt-Halterung kann das Mast-Halteelement aufweisen, insbesondere sein.

In einer Weiterbildung der Erfindung ist der Dreh-Leitungsabschnitt mit dem Mast-Leitungsabschnitt um eine Drehachse drehbar verbunden. Die Vorrichtung ist zur Anordnung der Drehachse nicht-parallel, insbesondere orthogonal, zu einer Längsachse des Mastsegments ausgebildet bzw. konfiguriert. Insbesondere kann die Vorrichtung zur Anordnung der Drehachse horizontal ausgebildet sein. Zusätzlich oder alternativ kann das Dreh-Halteelement den Dreh-Leitungsabschnitt an einer Stelle halten, an welcher der Dreh-Leitungsabschnitt nicht-parallel, insbesondere orthogonal, zu der Drehachse verlaufen kann.

In einer Weiterbildung der Erfindung ist der Dreh-Leitungsabschnitt mit dem Mast-Leitungsabschnitt um eine, insbesondere die, Drehachse drehbar verbunden. Das Drehlager ist zur drehbaren Verbindung um die, insbesondere dieselbe, Drehachse des Dreh-Halteelements mit dem Mastsegment ausgebildet bzw. konfiguriert. Dies ermöglicht eine relativ gute Drehbarkeit des Dreh-Halteelements mit dem Dreh-Leitungsabschnitt und/oder, dass der Dreh-Leitungsabschnitt-Leitungsabschnitt, der Mast-Leitungsabschnitt und/oder das Dreh-Halteelement, insbesondere jeweils mindestens an der drehbaren Verbindung, unflexibel sein können/kann. Insbesondere kann die Vorrichtung zur Anordnung der Drehachse horizontal ausgebildet sein. Zusätzlich oder alternativ kann das Dreh-Halteelement den Dreh-Leitungsabschnitt an einer Stelle halten, an welcher der Dreh-Leitungsabschnitt nicht-parallel, insbesondere orthogonal, zu der Drehachse verlaufen kann. Weiter zusätzlich oder alternativ kann eine Ebene des Kreises orthogonal zu der Drehachse sein.

In einer Weiterbildung der Erfindung weist der Mast-Leitungsabschnitt einen Mast-Bogen auf. Der Mast-Bogen ist mit dem Dreh-Leitungsabschnitt, insbesondere um die Drehachse, drehbar verbunden. Zusätzlich oder alternativ führt bzw. verläuft, insbesondere vollständig, der Mast-Bogen durch den Kreis hindurch.

Weiter zusätzlich oder alternativ weist der Dreh-Leitungsabschnitt einen Dreh-Bogen auf. Der Dreh-Bogen ist mit dem Mast-Leitungsabschnitt, insbesondere dem Mast-Bogen, insbesondere um die Drehachse, drehbar verbunden. Zusätzlich oder alternativ führt bzw. verläuft, insbesondere vollständig, der Dreh-Bogen durch den Kreis hindurch. Weiter zusätzlich oder alternativ hält das Dreh-Halteelement den Dreh-Leitungsabschnitt an einem von dem Mast-Leitungsabschnitt, insbesondere dem Mast-Bogen, entfernten bzw. beabstandeten Ende des Dreh-Bogens.

Der Mast-Bogen kann ermöglichen, dass bei Anordnung der Drehachse nicht-parallel, insbesondere orthogonal, zu der Längsachse des Mastsegments ein dem Mast-Bogen vorherhergehender, insbesondere gerader, Teil des Mast-Leitungsabschnitts entlang des Mastsegments, insbesondere parallel zu der Längsachse, verlaufen kann.

Zusätzlich oder alternativ kann der Dreh-Bogen ermöglichen, dass bei Anordnung der Drehachse nicht-parallel, insbesondere orthogonal, zu der Längsachse des Mastsegments ein dem Dreh-Bogen nachfolgender, insbesondere gerader, Teil des Mast-Leitungsabschnitts und/oder ein dem Dreh-Bogen nachfolgender, insbesondere gerader, Schlauch entlang des Mastsegments, insbesondere parallel zu der Längsachse, verlaufen kann.

Insbesondere können/kann der Mast-Bogen und/oder der Dreh-Bogen jeweils ein 90 Grad-Bogen und/oder ein Rohr-Bogen sein. Zusätzlich oder alternativ kann das Dreh-Halteelement den Dreh-Leitungsabschnitt an einem dem Mast-Leitungsabschnitt, insbesondere dem Mast-Bogen, nahen bzw. benachbarten Ende des Dreh-Bogens halten.

In einer Ausgestaltung der Erfindung ist der Dreh-Bogen mit dem Mast-Bogen um eine, insbesondere die, Drehachse drehbar verbunden. Der Dreh-Bogen und der Mast-Bogen begrenzen entlang der Drehachse einen Innenbereich. Ein Lagerpunkt, insbesondere ein Lagermittelpunkt, des Drehlagers und/oder ein Kreismittelpunkt des Kreises sind/ist in dem Innenbereich, insbesondere auf der Drehachse, angeordnet. Zusätzlich oder alternativ führt das Dreh-Halteelement von dem Drehlager zu dem Dreh-Leitungsabschnitt, insbesondere dem entfernten Ende des Dreh-Bogens, in dem Innenbereich. Dies ermöglicht, dass die Drehung des Dreh-Halteelements mit dem Dreh-Leitungsabschnitt relativ uneingeschränkt, insbesondere endlos, sein kann, insbesondere im Unterschied zu einer nicht-erfindungsgemäßen Anordnung des Lagerpunkts und/oder des Kreismittelpunkts außerhalb des Dreh-Bogens und des Mast-Bogens entlang der Drehachse bzw. des Innenbereichs, insbesondere in Verlängerung der Drehachse, und/oder einer nicht-erfindungsgemäßen Führung des Dreh-Halteelements von dem Drehlager zu dem Dreh-Leitungsabschnitt nicht in dem Innenbereich bzw. außerhalb des Innenbereichs, wodurch die Drehung des Dreh-Halteelements mit dem Dreh-Leitungsabschnitt relativ eingeschränkt sein kann. Insbesondere können ein Drehpunkt, insbesondere Drehmittelpunkt, der drehbaren Verbindung des Dreh-Leitungsabschnitts mit dem Mast-Leitungsabschnitt und der Lagerpunkt und/oder der Kreismittelpunkt koinzidieren bzw. zusammenfallen.

In einer Weiterbildung der Erfindung weist die Vorrichtung eine Schlauchkupplung auf. Die Schlauchkupplung ist zur Verbindung, insbesondere Flussverbindung, des Dreh-Leitungsabschnitts mit einem, insbesondere dem, Schlauch, insbesondere einem Endschlauch, ausgebildet bzw. konfiguriert. Das Dreh-Halteelement hält den Dreh-Leitungsabschnitt an der Schlauchkupplung.

Zusätzlich oder alternativ weist der Dreh-Leitungsabschnitt den Schlauch auf. Das Dreh-Halteelement hält bzw. stützt, insbesondere drehfest, den Schlauch entfernt bzw. beabstandet von dem Mast-Leitungsabschnitt.

Insbesondere kann die Schlauchkupplung eine Schalenkupplung aufweisen, insbesondere sein. Zusätzlich oder alternativ kann die Schlauchkupplung von dem Mast-Leitungsabschnitt entfernt sein. Weiter zusätzlich oder alternativ kann die Schlauchkupplung von der Drehkupplung verschieden sein. Weiter zusätzlich oder alternativ kann der Dreh-Leitungsabschnitt mittels der Schlauchkupplung an dem Dreh-Halteelement gehalten sein, insbesondere aber nicht unmittelbar.

In einer Weiterbildung der Erfindung ist die Leitung eine Förderleitung, insbesondere eine Baustoff-Förderleitung, insbesondere eine Dickstoff-Förderleitung. Die Leitungsabschnitt-Halterung ermöglicht, dass die Förderleitung, insbesondere gefüllt mit Baustoff, insbesondere Dickstoff, eine relativ große Masse aufweisen kann. Insbesondere kann Baustoff Sand, Riesel und/oder Kies aufweisen, insbesondere sein. Zusätzlich oder alternativ kann Dickstoff Mörtel, Zement, Estrich, Beton und/oder Putz aufweisen, insbesondere sein. Weiter zusätzlich oder alternativ kann Dickstoff ein Gemisch aus flüssigen und festen Bestandteilen aufweisen, insbesondere sein.

In einer Weiterbildung der Erfindung ist das Drehlager ein Vierpunktlager. Dies ermöglicht eine Aufnahme von Kippmomenten und/oder Axial- und/oder Radialkräften, insbesondere in Bezug auf die Drehachse. Insbesondere kann ein Lager-Element des Drehlagers eine Kugel sein.

In einer Weiterbildung der Erfindung weist die Leitungsabschnitt-Halterung einen Drehflansch auf. Der Drehflansch ist zur, insbesondere drehfesten, Halterung bzw. Stützung durch das Mastsegment ausgebildet bzw. konfiguriert. Des Weiteren weist der Drehflansch das Drehlager auf. Die Leitung führt bzw. verläuft, insbesondere vollständig, durch den Drehflansch, insbesondere eine Durchführung bzw. eine Öffnung des Drehflansches, hindurch. Insbesondere kann der Drehflansch die Leitung umfassen, insbesondere umschließen.

Die Vorrichtung kann zur Anordnung des Mast-Leitungsabschnitts und des Dreh-Leitungsabschnitts auf verschiedenen, insbesondere gegenüberliegenden, Seiten des Mastsegments ausgebildet sein.

In einer Weiterbildung der Erfindung ist die Vorrichtung zur, insbesondere vollständigen, Anordnung des Mast-Leitungsabschnitts und des Dreh-Leitungsabschnitts auf einer selben Seite des Mastsegments, insbesondere mit dem Dreh-Leitungsabschnitt, insbesondere entlang der Drehachse, entfernter als mit dem Mast-Leitungsabschnitt von dem Mastsegment, insbesondere von der Längsachse des Mastsegments, ausgebildet bzw. konfiguriert. Dies ermöglicht einen Einsatz der Vorrichtung als Tremie für einen Mastfaltungstyp 5RZ und/oder für Faltmasten, bei deren Faltungsart relativ große Winkelbereiche durchfahren werden müssen.

In einer Weiterbildung der Erfindung weist die Vorrichtung das Mastsegment auf. Das Mastsegment hält bzw. stützt, insbesondere drehfest, das Drehlager, insbesondere und den Mast-Leitungsabschnitt, insbesondere und ist mit dem Dreh-Halteelement mittels des Drehlagers drehbar verbunden.

Der erfindungsgemäße Verteilermast, insbesondere Faltmast, weist eine, insbesondere die, Vorrichtung wie zuvor beschrieben aufweisend das Mastsegment und weitere Mastsegmente auf. Insbesondere sind das Mastsegment und die weiteren Mastsegmente faltbar, insbesondere Roll-faltbar, insbesondere Roll-Z-faltbar, miteinander verbunden. Der Verteilermast kann die gleichen Vorteile wie zuvor für die Vorrichtung beschrieben ermöglichen. Insbesondere wird bezüglich der Bedeutung von Roll-faltbar, insbesondere Roll-Z-faltbar, auf die einschlägige Fachliteratur verweisen. Zusätzlich oder alternativ kann Roll-faltbar erfordern, dass der Mast-Leitungsabschnitt und der Dreh-Leitungsabschnitt auf derselben Seite des Mastsegments angeordnet sein brauchen oder können.

Das erfindungsgemäße System weist einen, insbesondere den, Verteilermast wie zuvor beschrieben und eine Baustoffpumpe, insbesondere eine Dickstoffpumpe, auf. Die Baustoffpumpe ist zur Förderung von Baustoff, insbesondere von Dickstoff, durch die Leitung hindurch ausgebildet bzw. konfiguriert. Das System kann die gleichen Vorteile wie zuvor für die Vorrichtung beschrieben ermöglichen. Insbesondere kann das System ein mobiles System, insbesondere eine Autobetonpumpe, sein. Zusätzlich oder alternativ kann Baustoff Sand, Riesel und/oder Kies aufweisen, insbesondere sein. Weiter zusätzlich oder alternativ kann Dickstoff Mörtel, Zement, Estrich, Beton und/oder Putz aufweisen, insbesondere sein. Weiter zusätzlich oder alternativ kann Dickstoff ein Gemisch aus flüssigen und festen Bestandteilen aufweisen, insbesondere sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines Unterteils bzw. einer Baustoffpumpe eines erfindungsgemäßen Systems,
- Fig. 2: eine Perspektivansicht eines Oberteils bzw. eines Verteilermasts des Systems der Fig. 1,
- Fig. 3: eine weitere Perspektivansicht des Verteilermasts der Fig. 2,
- Fig. 4: eine nochmals weitere Perspektivansicht des Verteilermasts der Fig. 2,
- Fig. 5: eine Perspektivansicht einer erfindungsgemäßen Vorrichtung des Verteilermasts der Fig. 2,
- Fig. 6: eine weitere Perspektivansicht der Vorrichtung der Fig. 5,
- Fig. 7: eine nochmals weitere Perspektivansicht der Vorrichtung der Fig. 5,
- Fig. 8: eine nochmals weitere Perspektivansicht der Vorrichtung der Fig. 5, und
- Fig. 9: eine Perspektivansicht einer weiteren erfindungsgemäßen Vorrichtung.

### DETAILLIERTE BESCHREIBUNG DER AUSFÜHRUNGSBEISPIELE

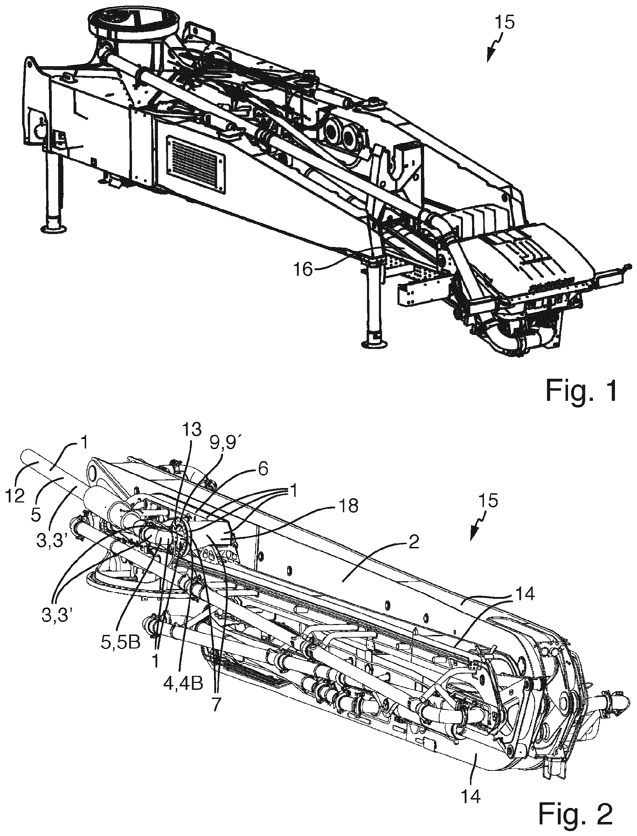

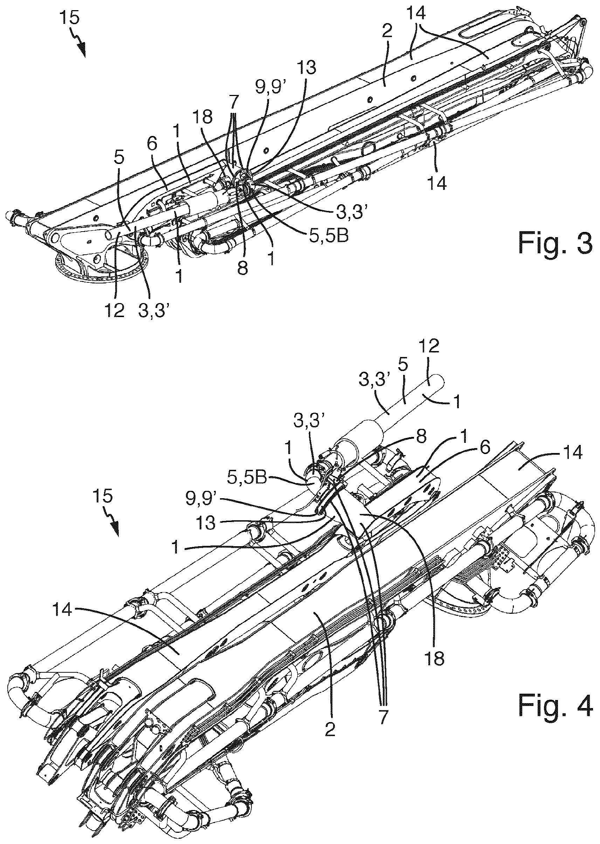

Fig. 2 bis 8 und 9 zeigen, insbesondere jeweils, eine erfindungsgemäße Vorrichtung 1 für einen Verteilermast 2, in dem Ausführungsbeispiel der Fig. 2 bis 8 einen Faltmast. Die Vorrichtung 1 weist eine Leitung 3 und eine Leitungsabschnitt-Halterung 7 auf. Die Leitung 3 weist einen Mast-Leitungsabschnitt 4 und einen losen Dreh-Leitungsabschnitt 5 auf. Der Dreh-Leitungsabschnitt 5 ist mit dem Mast-Leitungsabschnitt 4 drehbar verbunden. Die Leitungsabschnitt-Halterung 7 weist ein loses Dreh-Halteelement 8 und ein Drehlager 9 auf. Das Dreh-Halteelement 8 hält den Dreh-Leitungsabschnitt 5 entfernt von dem Mast-Leitungsabschnitt 4. Das Drehlager 9 ist zur Halterung durch ein, insbesondere letztes, Mastsegment 6 für den Verteilermast 2 ausgebildet. Des Weiteren ist das Drehlager 9 zur drehbaren Verbindung des Dreh-Halteelements 8 mit dem Mastsegment 6 ausgebildet. Außerdem definiert das Drehlager 9 einen Kreis KR. Die Leitung 3 führt durch den Kreis KR hindurch.

In den gezeigten Ausführungsbeispielen ist der Mast-Leitungsabschnitt 4 zur Halterung durch das Mastsegment 6 ausgebildet.

Weiter weist in den gezeigten Ausführungsbeispielen das Drehlager 9, insbesondere eine Bewegungsbahn des Drehlagers 9, die Form des, insbesondere geschlossenen, Kreises KR auf. In alternativen Ausführungsbeispielen kann das Drehlager, insbesondere die Bewegungsbahn des Drehlagers, die Form eines, insbesondere offenen, Kreisbogens, aufweisen, wobei der Kreisbogen den Kreis definieren kann.

Zudem weist in den gezeigten Ausführungsbeispielen die Vorrichtung 1 das Mastsegment 6 auf. Das Mastsegment 6 hält das Drehlager 9, insbesondere und den Mast-Leitungsabschnitt 4, insbesondere und ist mit dem Dreh-Halteelement 8 mittels des Drehlagers 9 drehbar verbunden.

Der erfindungsgemäße Verteilermast 2, in dem Ausführungsbeispiel der Fig. 2 bis 8 der Faltmast, weist die Vorrichtung 1, insbesondere aufweisend das Mastsegment 6, und weitere Mastsegmente 14 auf.

In dem Ausführungsbeispiel der Fig. 2 bis 8 sind das Mastsegment 6 und die weiteren Mastsegmente 14 faltbar, insbesondere Roll-faltbar, insbesondere Roll-Z-faltbar, miteinander verbunden.

Das erfindungsgemäße System 1 weist den Verteilermast 2 und eine Baustoffpumpe 16, in Fig. 1 eine Dickstoffpumpe, auf. Die Baustoffpumpe 16 ist zur Förderung von Baustoff, insbesondere von Dickstoff, durch die Leitung 3 hindurch ausgebildet.

Im Detail ist die Leitung 3 eine Förderleitung, insbesondere eine Baustoff-Förderleitung, insbesondere eine Dickstoff-Förderleitung.

Des Weiteren ist der Dreh-Leitungsabschnitt 5 mit dem Mast-Leitungsabschnitt 4 um eine Drehachse DA drehbar verbunden.

In den gezeigten Ausführungsbeispielen ist die Drehachse DA horizontal, insbesondere in Richtung x, angeordnet.

Zusätzlich ist die Vorrichtung 1 zur Anordnung der Drehachse DA nicht-parallel, insbesondere orthogonal, zu einer Längsachse LA, insbesondere in Richtung y, des Mastsegments 6 ausgebildet.

In den gezeigten Ausführungsbeispielen ist die Drehachse DA nicht-parallel, insbesondere orthogonal, zu der Längsachse LA des Mastsegments 6 angeordnet.

Weiter zusätzlich ist das Drehlager 9 zur drehbaren Verbindung um die Drehachse DA des Dreh-Halteelements 8 mit dem Mastsegment 6 ausgebildet.

In den gezeigten Ausführungsbeispielen ist das Dreh-Halteelement 8 mit dem Mastsegment 6 mittels des Drehlagers 9 um die Drehachse DA drehbar verbunden.

Außerdem weist der Mast-Leitungsabschnitt 4 einen Mast-Bogen 4B auf. Der Mast-Bogen4B ist mit dem Dreh-Leitungsabschnitt 5 drehbar verbunden. Zusätzlich führt der Mast-Bogen 4B durch den Kreis KR hindurch.

Weiter zusätzlich weist der Dreh-Leitungsabschnitt 5 einen Dreh-Bogen 5B auf. Der Dreh-Bogen 5B ist mit dem Mast-Leitungsabschnitt 4, in dem Ausführungsbeispiel der Fig. 2 bis 8 dem Mast-Bogen 4B, drehbar verbunden. Zusätzlich führt der Dreh-Bogen 5B durch den Kreis KR hindurch. Weiter zusätzlich hält das Dreh-Halteelement 8 den Dreh-Leitungsabschnitt 5 an einem von dem Mast-Leitungsabschnitt 4, insbesondere dem Mast-Bogen 4B, entfernten Ende 5BE des Dreh-Bogens 5B.

In den gezeigten Ausführungsbeispielen sind der Mast-Bogen 4B und der Dreh-Bogen 5B jeweils ein 90 Grad-Bogen und ein Rohr-Bogen sein.

Im Detail ist der Dreh-Bogen 5B mit dem Mast-Bogen 4B um die Drehachse DA drehbar verbunden. Der Dreh-Bogen 5B und der Mast-Bogen 4B begrenzen entlang der Drehachse DA einen Innenbereich IB. Ein Lagerpunkt 9L des Drehlagers bzw. ein Kreismittelpunkt KMP des Kreises KR ist in dem Innenbereich IB, in den gezeigten Ausführungsbeispielen, auf der Drehachse DA, angeordnet. Zusätzlich führt das Dreh-Halteelement 8 von dem Drehlager 9 zu dem Dreh-Leitungsabschnitt 5, in den gezeigten Ausführungsbeispielen dem entfernten Ende 5BE des Dreh-Bogens 5BE, in dem Innenbereich IB.

In den gezeigten Ausführungsbeispielen koinzidieren ein Drehpunkt DP der drehbaren Verbindung des Dreh-Leitungsabschnitts 5, in dem Ausführungsbeispiel der Fig. 2 bis 8 des Dreh-Bogens 5B, mit dem Mast-Leitungsabschnitt 4, in dem Ausführungsbeispiel der Fig. 2 bis 8 dem Mast-Bogen 4B, und der Lagerpunkt 9L bzw. der Kreismittelpunkt KMP.

Zudem weist die Vorrichtung 1 eine von dem Dreh-Halteelement 8 und dem Drehlager 9 verschiedene Drehkupplung 10 auf. Die Drehkupplung 10 verbindet drehbar den Dreh-Leitungsabschnitt 5, in den gezeigten Ausführungsbeispielen den Dreh-Bogen 5B, mit dem Mast-Leitungsabschnitt 4, in dem Ausführungsbeispiel der Fig. 2 bis 8 dem Mast-Bogen 4B.

In den gezeigten Ausführungsbeispielen ist die die Drehkupplung 10 eine Rohrkupplung.

Des Weiteren weist die Vorrichtung 1 eine Schlauchkupplung 11 auf. Die Schlauchkupplung 11 ist zur Verbindung des Dreh-Leitungsabschnitts 5, in den gezeigten Ausführungsbeispielen des Dreh-Bogens 5B, mit einem Schlauch 12, insbesondere einem Endschlauch, ausgebildet. Das Dreh-Halteelement hält den Dreh-Leitungsabschnitt an der Schlauchkupplung.

In den gezeigten Ausführungsbeispielen verbindet die Schlauchkupplung 11 den Dreh-Leitungsabschnitt 5 mit dem Schlauch 12.

Zusätzlich weist der Dreh-Leitungsabschnitt 5 den Schlauch 12 auf. Das Dreh-Halteelement 8 hält den Schlauch 12 entfernt von dem Mast-Leitungsabschnitt 4.

In den gezeigten Ausführungsbeispielen ist die Schlauchkupplung 11 eine Schalenkupplung.

Die drehbare Verbindung des Dreh-Leitungsabschnitts 5 mit dem Mast-Leitungsabschnitt 4 und die drehbare Verbindung des Dreh-Halteelements 8 mit dem Mastsegment 6 mittels des Drehlagers 9 ermöglichen, dass das Dreh-Halteelement 8 mit dem Dreh-Leitungsabschnitt 5, insbesondere dem Schlauch 12, sich selbst ausrichten kann, insbesondere aufgrund von Gravitation.

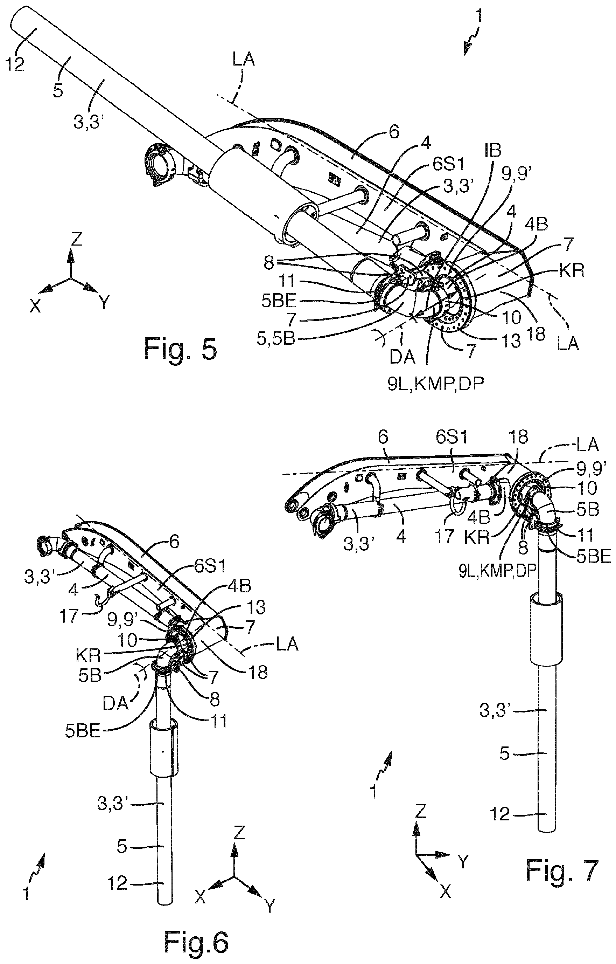

Somit kann das Dreh-Halteelement 8 mit dem Dreh-Leitungsabschnitt 5, insbesondere dem Schlauch 12, sich entgegen einer Richtung z vertikal nach unten drehen, wie in Fig. 6 bis 9 gezeigt.

Außerdem kann der dem Dreh-Bogen 5B nachfolgende Teil des Mast-Leitungsabschnitts 5 bzw. der Schlauch 12 entlang des Mastsegments 6, insbesondere parallel zu der Längsachse LA, verlaufen, wie in Fig. 2 bis 5 gezeigt.

Insbesondere weist die Vorrichtung 1 einen Schlauch-Auflieger 17 auf. Das Mastsegment 6 hält den Schlauch-Auflieger 17. Auf dem Schlauch-Auflieger 17 kann der Schlauch 12 aufliegen, wie in Fig. 2 bis 5 gezeigt.

Weiter verläuft ein dem Mast-Bogen 4B vorherhergehender Teil des Mast-Leitungsabschnitts 4, insbesondere ein gerades Rohr-Teil, entlang des Mastsegments 6, insbesondere parallel zu der Längsachse LA.

Zudem ist das Drehlager 9 ein Vierpunktlager 9`.

Des Weiteren weist die Leitungsabschnitt-Halterung 7 einen Drehflansch 13 auf. Der Drehflansch 13 ist zur Halterung durch das Mastsegment 6 ausgebildet Außerdem weist der Drehflansch 13 das Drehlager 9 auf. Die Leitung 3 führt durch den Drehflansch 13 hindurch.

In den gezeigten Ausführungsbeispielen hält das Mastsegment den Drehflansch 13.

Weiter weist die Leitungsabschnitt-Halterung 7 ein Mast-Halteelement 18 aufweist. Das Mast-Halteelement 18 ist zur Halterung durch das Mastsegment 6 ausgebildet. Zudem hält das Mast-Halteelement 18 das Drehlager 9, insbesondere den Drehflansch 13 aufweisend das Drehlager 9.

In den gezeigten Ausführungsbeispielen hält das Mastsegment 6 das Mast-Halteelement 18.

Zusammenfassend: Das Mastsegment 6 hält den Mast-Leitungsabschnitt 4 und das Mast-Halteelement 18. Das Halteelement 18 hält den Drehflansch 13. Der Drehflansch 13 weist das Drehlager 9 auf bzw. hält dieses. Das Drehlager 9 hält das Dreh-Halteelement 8. Das Dreh-Halteelement 8 hält die Schlauchkupplung 11. Die Schlauchkupplung 11 hält den Dreh-Leitungsabschnitt 5, insbesondere den Dreh-Rohrbogen 5B und den Schlauch 12.

Zudem ist der Dreh-Leitungsabschnitt 5, in den gezeigten Ausführungsbeispielen der Dreh-Bogen 5B, mit dem Mast-Leitungsabschnitt 4, in den gezeigten Ausführungsbeispielen dem Mast-Bogen 4B, endlos drehbar verbunden. Das Drehlager 9 ist zur endlos drehbaren Verbindung des Dreh-Halteelements 8 mit dem Mastsegment 6 ausgebildet. Die Vorrichtung 1 ist derart ausgebildet, dass bei Halterung des Drehlagers 9, insbesondere und des Mast-Leitungsabschnitts 4, durch das Mastsegment 6 eine Endlos-Drehung des Dreh-Halteelements 8 mit dem Dreh-Leitungsabschnitt 5, insbesondere dem Dreh-Bogen 5B und dem Schlauch 12, durch das Mastsegment 6 und den Mast-Leitungsabschnitt 4, insbesondere und die übrige Leitungsabschnitt-Halterung 7, in den gezeigten Ausführungsbeispielen aufweisend das Drehlager 9 und das Mast-Halteelement 18, uneingeschränkt ist.

In den gezeigten Ausführungsbeispielen ist das Dreh-Halteelement 8 mit dem Mastsegment 6 endlos drehbar verbunden.

Des Weiteren ist die Vorrichtung 1 zur Anordnung der drehbaren Verbindung des Dreh-Leitungsabschnitts 5, in den gezeigten Ausführungsbeispielen des Dreh-Bogens 5B, mit dem Mast-Leitungsabschnitt 4, in den gezeigten Ausführungsbeispielen dem Mast-Bogen 4, und der drehbaren Verbindung der Leitungsabschnitt-Halterung 7 an einem, insbesondere losen, Ende des Mastsegments 6 ausgebildet.

In den gezeigten Ausführungsbeispielen ist die drehbare Verbindung des Dreh-Leitungsabschnitts 5 mit dem Mast-Leitungsabschnitt 4 an dem Ende des Mastsegments 6 angeordnet und die drehbare Verbindung der Leitungsabschnitt-Halterung 7 ist an dem Ende des Mastsegments 6 angeordnet.

In dem Ausführungsbeispiel der Fig. 2 bis 8 ist die Vorrichtung 1 zur Anordnung des Mast-Leitungsabschnitts 4 und des Dreh-Leitungsabschnitts 5 auf einer selben Seite 6S1 des Mastsegments 6, insbesondere mit dem Dreh-Leitungsabschnitt 5, insbesondere entlang der Drehachse DA, entfernter als mit dem Mast-Leitungsabschnitt 4 von dem Mastsegment 6, insbesondere von der Längsachse LA des Mastsegments 6, ausgebildet.

Insbesondere sind der Mast-Leitungsabschnitt 4 und der Dreh-Leitungsabschnitt 5 auf derselben Seite 6S1 des Mastsegments 6 angeordnet.

In alternativen Ausführungsbeispielen kann die Vorrichtung zur Anordnung des Mast-Leitungsabschnitts und des Dreh-Leitungsabschnitts auf einer selben Seite des Mastsegments mit dem Mast-Leitungsabschnitt, insbesondere entlang der Drehachse, entfernter als mit dem Dreh-Leitungsabschnitt von dem Mastsegment, insbesondere von der Längsachse des Mastsegments, ausgebildet sein.

Im Detail führt in dem Ausführungsbeispiel der Fig. 2 bis 8 das Mast-Halteelement 18 von dem Mastsegment 6 zu dem Drehlager 9, insbesondere dem Drehflansch 13 aufweisend das Drehlager 9, entlang der Drehachse DA, insbesondere in Richtung x.

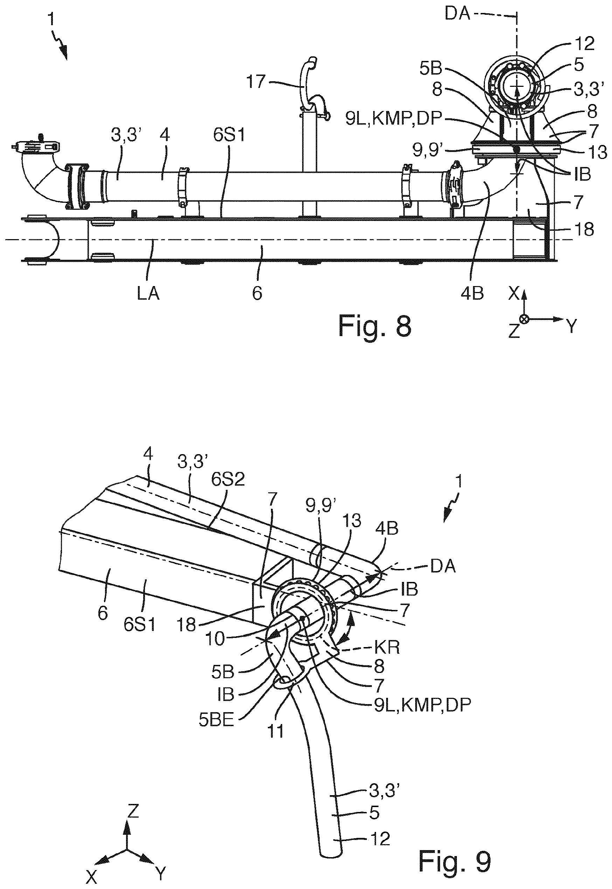

In dem Ausführungsbeispiel der Fig. 9 ist die Vorrichtung 1 zur Anordnung des Mast-Leitungsabschnitts 4 und des Dreh-Leitungsabschnitts 5 auf verschiedenen, insbesondere entlang der Drehachse DA gegenüberliegenden, Seiten 6S1, 6S2 des Mastsegments 6 ausgebildet.

Insbesondere sind der Mast-Leitungsabschnitt 4 und der Dreh-Leitungsabschnitt 5 auf den verschiedenen Seiten 6S1, 6S2 des Mastsegments 6 angeordnet.

Im Detail führt in dem Ausführungsbeispiel der Fig. 9 das Mast-Halteelement 18 von dem Mastsegment 6 zu dem Drehlager 9, insbesondere dem Drehflansch 13 aufweisend das Drehlager 9, in Verlängerung der Längsachse LA des Mastsegments 6, insbesondere in Richtung y.

Wie die gezeigten und oben erläuterten Ausführungsbeispiele deutlich machen, stellt die Erfindung eine vorteilhafte Vorrichtung für einen Verteilermast, wobei die Vorrichtung verbesserte Eigenschaften aufweist, einen Verteilermast aufweisend eine solche Vorrichtung und ein System aufweisend einen solchen Verteilermast bereit.

## Patentansprüche

1. Vorrichtung (1) für einen Verteilermast (2), wobei die Vorrichtung (1) aufweist:
- eine Leitung (3), wobei die Leitung (3) einen Mast-Leitungsabschnitt (4) und einen losen Dreh-Leitungsabschnitt (5) aufweist, wobei der Dreh-Leitungsabschnitt (5) mit dem Mast-Leitungsabschnitt (4) drehbar verbunden ist, und
- eine Leitungsabschnitt-Halterung (7), wobei die Leitungsabschnitt-Halterung (7) ein loses Dreh-Halteelement (8) und ein Drehlager (9) aufweist, wobei das Dreh-Halteelement (8) den Dreh-Leitungsabschnitt (5) entfernt von dem Mast-Leitungsabschnitt (4) hält, und wobei das Drehlager (9) zur Halterung durch ein Mastsegment (6) für den Verteilermast (2) und zur drehbaren Verbindung des Dreh-Halteelements (8) mit dem Mastsegment (6) ausgebildet ist,
- wobei die Vorrichtung (1) eine von dem Dreh-Halteelement (8) und dem Drehlager (9) verschiedene Drehkupplung (10) aufweist, wobei die Drehkupplung (10) den Dreh-Leitungsabschnitt (5) mit dem Mast-Leitungsabschnitt (4) drehbar verbindet,
**dadurch gekennzeichnet,**
**dass** das Drehlager (9) einen Kreis (KR) definiert, wobei die Leitung (3) durch den Kreis (KR) hindurch führt.

2. Vorrichtung (1) nach Anspruch 1,
- wobei der Dreh-Leitungsabschnitt (5) mit dem Mast-Leitungsabschnitt (4) endlos drehbar verbunden ist,
- wobei das Drehlager (9) zur endlos drehbaren Verbindung des Dreh-Halteelements (8) mit dem Mastsegment (6) ausgebildet ist, und
- wobei die Vorrichtung (1) derart ausgebildet ist, dass bei Halterung des Drehlagers (9) durch das Mastsegment (6) eine Endlos-Drehung des Dreh-Halteelements (8) mit dem Dreh-Leitungsabschnitt (5) durch das Mastsegment (6) und den Mast-Leitungsabschnitt (4), insbesondere und die übrige Leitungsabschnitt-Halterung (7), uneingeschränkt ist.

3. Vorrichtung (1) nach einem der vorhergehenden Ansprüche,
- wobei der Dreh-Leitungsabschnitt (5) mit dem Mast-Leitungsabschnitt (4) um eine Drehachse (DA) drehbar verbunden ist, wobei die Vorrichtung (1) zur Anordnung der Drehachse (DA) nicht-parallel, insbesondere orthogonal, zu einer Längsachse (LA) des Mastsegments (6) ausgebildet ist.

4. Vorrichtung (1) nach einem der vorhergehenden Ansprüche,
- wobei der Dreh-Leitungsabschnitt (5) mit dem Mast-Leitungsabschnitt (4) um eine Drehachse (DA) drehbar verbunden ist, und
- wobei das Drehlager (9) zur drehbaren Verbindung um die Drehachse (DA) des Dreh-Halteelements (8) mit dem Mastsegment (6) ausgebildet ist.

5. Vorrichtung (1) nach einem der vorhergehenden Ansprüche,
- wobei der Mast-Leitungsabschnitt (4) einen Mast-Bogen (4B) aufweist, wobei der Mast-Bogen (4B) mit dem Dreh-Leitungsabschnitt (5) drehbar verbunden ist und/oder durch den Kreis (KR) hindurch führt, und/oder
- wobei der Dreh-Leitungsabschnitt (5) einen Dreh-Bogen (5B) aufweist, wobei der Dreh-Bogen (5B) mit dem Mast-Leitungsabschnitt (4), insbesondere dem Mast-Bogen (4B), drehbar verbunden ist und/oder durch den Kreis (KR) hindurch führt, und/oder wobei das Dreh-Halteelement (8) den Dreh-Leitungsabschnitt (5) an einem von dem Mast-Leitungsabschnitt (4), insbesondere dem Mast-Bogen (4B), entfernten Ende (5BE) des Dreh-Bogens (5B) hält.

6. Vorrichtung (1) nach Anspruch 5,
- wobei der Dreh-Bogen (5B) mit dem Mast-Bogen (4B) um eine Drehachse (DA) drehbar verbunden ist,
- wobei der Dreh-Bogen (5B) und der Mast-Bogen (4B) entlang der Drehachse (DA) einen Innenbereich (IB) begrenzen, und
- wobei ein Lagerpunkt (9L) des Drehlagers (9) und/oder ein Kreismittelpunkt (KMP) des Kreises (KR) in dem Innenbereich (IB), insbesondere auf der Drehachse (DA), angeordnet sind/ist, und/oder wobei das Dreh-Halteelement (8) von dem Drehlager (9) zu dem Dreh-Leitungsabschnitt (5) in dem Innenbereich (IB) führt.

7. Vorrichtung (1) nach einem der vorhergehenden Ansprüche,
- wobei die Vorrichtung (1) eine Schlauchkupplung (11) aufweist, wobei die Schlauchkupplung (11) zur Verbindung des Dreh-Leitungsabschnitts (5) mit einem Schlauch (12), insbesondere einem Endschlauch, ausgebildet ist, und wobei das Dreh-Halteelement (8) den Dreh-Leitungsabschnitt (5) an der Schlauchkupplung (11) hält, und/oder
- wobei der Dreh-Leitungsabschnitt (5) den Schlauch (12) aufweist, wobei das Dreh-Halteelement (8) den Schlauch (12) entfernt von dem Mast-Leitungsabschnitt (4) hält.

8. Vorrichtung (1) nach einem der vorhergehenden Ansprüche,
- wobei die Leitung (3) eine Förderleitung (3`), insbesondere eine Baustoff-Förderleitung, insbesondere eine Dickstoff-Förderleitung, ist.

9. Vorrichtung (1) nach einem der vorhergehenden Ansprüche,
- wobei das Drehlager (9) ein Vierpunktlager (9`) ist.

10. Vorrichtung (1) nach einem der vorhergehenden Ansprüche,
- wobei die Leitungsabschnitt-Halterung (7) einen Drehflansch (13) aufweist, wobei der Drehflansch (13) zur Halterung durch das Mastsegment (6) ausgebildet ist und das Drehlager (9) aufweist, und wobei die Leitung (3) durch den Drehflansch (13) hindurch führt.

11. Vorrichtung (1) nach einem der vorhergehenden Ansprüche,
- wobei die Vorrichtung zur Anordnung des Mast-Leitungsabschnitts (4) und des Dreh-Leitungsabschnitts (5) auf einer selben Seite (6S1) des Mastsegments (6), insbesondere mit dem Dreh-Leitungsabschnitt (5) entfernter als mit dem Mast-Leitungsabschnitt (4) von dem Mastsegment (6), ausgebildet ist.

12. Vorrichtung (1) nach einem der vorhergehenden Ansprüche,
- wobei die Vorrichtung (1) das Mastsegment (6) aufweist, wobei das Mastsegment (6) das Drehlager (9) hält.

13. Verteilermast (2), insbesondere Faltmast, wobei der Verteilermast (2) aufweist:
- eine Vorrichtung (1) nach Anspruch 12, und
- weitere Mastsegmente (14),
- insbesondere wobei das Mastsegment (6) und die weiteren Mastsegmente (14) faltbar, insbesondere Roll-faltbar, insbesondere Roll-Z-faltbar, miteinander verbunden sind.

14. System (15), wobei das System (15) aufweist:
- einen Verteilermast (2) nach Anspruch 13, und
- eine Baustoffpumpe (16), insbesondere eine Dickstoffpumpe, wobei die Baustoffpumpe (16) zur Förderung von Baustoff, insbesondere von Dickstoff, durch die Leitung (3) hindurch ausgebildet ist.

## Claims

1. A device (1) for a distribution mast (2), wherein the device (1) comprises:
- a line (3), wherein the line (3) has a mast line portion (4) and a loose rotating line portion (5), wherein the rotating line portion (5) is rotatably connected to the mast line portion (4), and
- a line portion mounting (7), wherein the line portion mounting (7) has a loose rotating holding element (8) and a rotary bearing (9), wherein the rotating holding element (8) holds the rotating line portion (5) remote from the mast line portion (4), and wherein the rotary bearing (9) is configured to be mounted by a mast segment (6) for the distribution mast (2) and for rotatably connecting the rotating holding element (8) to the mast segment (6),
- wherein the device (1) comprises a rotary coupling (10) being different from the rotating holding element (8) and the rotary bearing (9), wherein the rotary coupling (10) rotatably connects the rotating line portion (5) to the mast line portion (4),
**characterized in**
**that** the rotary bearing (9) defines a circle (KR), wherein the line (3) runs through the circle (KR).

2. The device (1) according to claim 1,
- wherein the rotating line portion (5) is connected in a continuously rotating manner to the mast line portion (4),
- wherein the rotary bearing (9) is configured for connecting the rotating holding element (8) to the mast segment (6) in a continuously rotating manner, and
- wherein the device (1) is configured in such a manner that, when the rotary bearing (9) is mounted by the mast segment (6), a continuous rotation of the rotating holding element (8) having the rotating line portion (5) is unrestricted by the mast segment (6) and the mast line portion (4), in particular and the remaining line portion mounting (7).

3. The device (1) according to one of the preceding claims,
- wherein the rotating line portion (5) is connected to the mast line portion (4) so as to be rotatable about a rotation axis (DA), wherein the device (1) for disposing the rotation axis (DA) is configured so as not to be parallel, in particular to be orthogonal, to a longitudinal axis (LA) of the mast segment (6).

4. The device (1) according to one of the preceding claims,
- wherein the rotating line portion (5) is connected to the mast line portion (4) so as to be rotatable about a rotation axis (DA), and
- wherein the rotary bearing (9) is configured for rotatably connecting the rotating holding element (8) to the mast segment (6) so as to be rotatable about the rotation axis (DA).

5. The device (1) according to one of the preceding claims,
- wherein the mast line portion (4) has a mast bend (4B), wherein the mast bend (4B) is rotatably connected to the rotating line portion (5) and/or runs through the circle (KR), and/or
- wherein the rotating line portion (5) has a rotating bend (5B), wherein the rotating bend (5) is rotatably connected to the mast line portion (4), in particular the mast bend (4B), and/or runs through the circle (KR), and/or wherein the rotating holding element (8) holds the rotating line portion (5) on an end (5BE) of the rotating bend (5B) being remote from the mast line portion (4), in particular the mast bend (4B).

6. The device (1) according to claim 5,
- wherein the rotating bend (5B) is connected to the mast bend (4B) so as to be rotatable about a rotation axis (DA),
- wherein the rotating bend (5B) and the mast bend (4B) along the rotation axis (DA) delimit an internal region (IB), and
- wherein a bearing point (9L) of the rotary bearing (9) and/or a circle center point (KMP) of the circle (KR) are/is disposed in the internal region (IB), in particular on the rotation axis (DA), and/or wherein the rotating holding element (8) runs from the rotary bearing (9) to the rotating line portion (5) in the internal region (IB).

7. The device (1) according to one of the preceding claims,
- wherein the device (1) comprises a hose coupling (11), wherein the hose coupling (11) is configured for connecting the rotating line portion (5) to a hose (12), in particular an end hose, and wherein the rotating holding element (8) holds the rotating line portion (5) on the hose coupling (11), and/or
- wherein the rotating line portion (5) comprises the hose (12), wherein the rotating holding element (8) holds the hose (12) remote from the mast line portion (4).

8. The device (1) according to one of the preceding claims,
- wherein the line (3) is a conveying line (3'), in particular a construction material conveying line, in particular a thick matter conveying line.

9. The device (1) according to one of the preceding claims,
- wherein the rotary bearing (9) is a four-point bearing (9').

10. The device (1) according to one of the preceding claims,
- wherein the line portion mounting (7) comprises a rotary flange (13), wherein the rotary flange (13) is configured to be mounted by the mast segment (6) and comprises the rotary bearing (9), and wherein the line (3) runs through the rotary flange (13).

11. The device (1) according to one of the preceding claims,
- wherein the device is configured for disposing the mast line portion (4) and the rotating line portion (5) on a same side (6S1) of the mast segment (6), in particular with the rotating line portion (5) being more remote from the mast segment (6) than the mast line portion (4).

12. The device (1) according to one of the preceding claims,
- wherein the device (1) comprises the mast segment (6), wherein the mast segment (6) holds the rotary bearing (9).

13. A distribution mast (2), in particular a foldable mast, wherein the distribution mast (2) comprises:
- a device (1) according to claim 12, and
- further mast segments (14),
- in particular wherein the mast segment (6) and the further mast segments (14) are connected to one another so as to be foldable, in particular foldable in a rolling manner, in particular foldable in a rolling Z-shaped manner.

14. A system (15), wherein the system (15) comprises:
- a distribution mast (2) according to claim 13, and
- a construction material pump (16), in particular a thick matter pump, wherein the construction material pump (16) is configured for conveying construction material, in particular thick matter, through the line (3).

## Revendications

1. Dispositif (1) pour un mât de distribution (2), le dispositif (1) présentant :
- une conduite (3), la conduite (3) présentant une partie de conduite de mât (4) et une partie de conduite rotative lâche (5), la partie de conduite rotative (5) étant reliée de manière rotative à la partie de conduite de mât (4), et
- un support de partie de conduite (7), le support de partie de conduite (7) présentant un élément de maintien rotatif lâche (8) et un palier rotatif (9), l'élément de maintien rotatif (8) maintenant la partie de conduite rotative (5) éloignée de la partie de conduite de mât (4), et le palier rotatif (9) étant réalisé pour le support par un segment de mât (6) pour le mât de distribution (2) et pour la liaison rotative de l'élément de maintien rotatif (8) au segment de mât (6),
- le dispositif (1) présentant un raccord rotatif (10) différent de l'élément de maintien rotatif (8) et du palier rotatif (9), le raccord rotatif (10) reliant de manière rotative la partie de conduite rotative (5) à la partie de conduite de mât (4),
**caractérisé en ce que**
le palier rotatif (9) définit un cercle (KR), la conduite (3) passant à travers le cercle (KR).

2. Dispositif (1) selon la revendication 1,
- la partie de conduite rotative (5) étant reliée de manière rotative continue à la partie de conduite de mât (4),
- le palier rotatif (9) étant réalisé pour la liaison rotative continue de l'élément de maintien rotatif (8) au segment de mât (6), et
- le dispositif (1) étant réalisé de telle sorte que, lors du support du palier rotatif (9) par le segment de mât (6), une rotation continue de l'élément de maintien rotatif (8) doté de la partie de conduite rotative (5) n'est pas limitée par le segment de mât (6) et la partie de conduite de mât (4), et en particulier le support de partie de conduite (7) restant.

3. Dispositif (1) selon l'une des revendications précédentes,
- la partie de conduite rotative (5) étant reliée à la partie de conduite de mât (4) de manière rotative autour d'un axe de rotation (DA), le dispositif (1) étant réalisé pour l'agencement de l'axe de rotation (DA) de manière non parallèle, en particulier orthogonale, à un axe longitudinal (LA) du segment de mât (6).

4. Dispositif (1) selon l'une des revendications précédentes,
- la partie de conduite rotative (5) étant reliée à la partie de conduite de mât (4) de manière rotative autour d'un axe de rotation (DA), et
- le palier rotatif (9) étant réalisé pour la liaison de l'élément de maintien rotatif (8) au segment de mât (6) de manière rotative autour de l'axe de rotation (DA).

5. Dispositif (1) selon l'une des revendications précédentes,
- la partie de conduite de mât (4) présentant un coude de mât (4B), le coude de mât (4B) étant relié de manière rotative à la partie de conduite rotative (5) et/ou passant par le cercle (KR), et/ou
- la partie de conduite rotative (5) présentant un coude rotatif (5B), le coude rotatif (5B) étant relié de manière rotative à la partie de conduite de mât (4), en particulier au coude de mât (4B), et/ou passant par le cercle (KR), et/ou l'élément de maintien rotatif (8) maintenant la partie de conduite rotative (5) à une extrémité (5BE) du coude rotatif (5B) éloignée de la partie de conduite de mât (4), en particulier du coude de mât (4B).

6. Dispositif (1) selon la revendication 5,
- le coude rotatif (5B) étant relié au coude de mât (4B) de manière rotative autour d'un axe de rotation (DA),
- le coude rotatif (5B) et le coude de mât (4B) délimitant une région intérieure (IB) le long de l'axe de rotation (DA), et
- un point d'appui (9L) du palier rotatif (9) et/ou un centre (KMP) du cercle (KR) étant agencés dans la région intérieure (IB), en particulier sur l'axe de rotation (DA), et/ou l'élément de maintien rotatif (8) menant du palier rotatif (9) à la partie de conduite rotative (5) dans la région intérieure (IB).

7. Dispositif (1) selon l'une des revendications précédentes,
- le dispositif (1) présentant un raccord de tuyau souple (11), le raccord de tuyau souple (11) étant réalisé pour la liaison de la partie de conduite rotative (5) à un tuyau souple (12), en particulier à un tuyau souple terminal, et l'élément de maintien rotatif (8) maintenant la partie de conduite rotative (5) sur le raccord de tuyau souple (11), et/ou
- la partie de conduite rotative (5) présentant le tuyau souple (12), l'élément de maintien rotatif (8) maintenant le tuyau souple (12) éloigné de la partie de conduite de mât (4).

8. Dispositif (1) selon l'une des revendications précédentes,
- la conduite (3) étant une conduite de refoulement (3'), en particulier une conduite de refoulement de matériau de construction, en particulier une conduite de refoulement de liquide épais.

9. Dispositif (1) selon l'une des revendications précédentes,
- le palier rotatif (9) étant un palier à quatre points (9').

10. Dispositif (1) selon l'une des revendications précédentes,
- le support de partie de conduite (7) présentant une bride rotative (13), la bride rotative (13) étant réalisée pour le support par le segment de mât (6) et le palier rotatif (9), et la conduite (3) passant à travers la bride rotative (13).

11. Dispositif (1) selon l'une des revendications précédentes,
- le dispositif étant réalisé pour l'agencement de la partie de conduite de mât (4) et de la partie de conduite rotative (5) sur un même côté (6S1) du segment de mât (6), en particulier avec la partie de conduite rotative (5) plus éloignée du segment de mât (6) que la partie de conduite de mât (4).

12. Dispositif (1) selon l'une des revendications précédentes,
- le dispositif (1) présentant le segment de mât (6), le segment de mât (6) maintenant le palier rotatif (9).

13. Mât de distribution (2), en particulier mât pliable, le mât de distribution (2) présentant :
- un dispositif (1) selon la revendication 12, et
- d'autres segments de mât (14),
- en particulier le segment de mât (6) et les autres segments de mât (14) étant reliés les uns aux autres de manière pliable, en particulier pliable de façon roulante, en particulier pliable en Z de façon roulante.

14. Système (15), le système (15) présentant :
- un mât de distribution (2) selon la revendication 13, et
- une pompe de matériau de construction (16), en particulier une pompe de liquide épais, la pompe de matériau de construction (16) étant réalisée pour le refoulement de matériau de construction, en particulier de liquide épais, à travers la conduite (3).
